# EUROPEAN PATENT SPECIFICATION

(11) **EP 2 397 390 B1**
(45) Date of publication and mention of the grant of the patent: **28.03.2018**
(21) Application number: 10166156.9
(22) Date of filing: 16.06.2010
(51) Int. Cl.: B62D 6/00

(54) **Generator for a mechatronic control system**
Generator für ein mechatronisches Steuerungssystem
Générateur pour système de contrôle mécatronique

(43) Date of publication of application: 21.12.2011
(73) Proprietor: Ford Global Technologies, LLC, Dearborn, MI 48126 (US)
(72) Inventor: Kluge, Torsten, 51491 Overath (DE)
(74) Representative: Illing, Rolf

(56) References cited:
- WO-A1-2006/099483
- DE-A1-102006 031 061
- FR-A1- 2 839 037
- US-A1- 2001 041 957
- US-A1- 2006 086 560

## Description

The invention is in general directed to a mechatronic control system and more specifically to a generator for a steering assembly control system of a vehicle, and to a method for controlling a steering assembly system. Current electronic power-assisted steering (EPAS) systems are usually controlled by a so called boost curve controller. A boost curve controller is a characteristic curve controller. The boost curve defines the relationship between measured driver/sensor torque (further on called TBar torque = torsion bar torque) and torque demand to the EPAS motor. Main benefit of this solution is that this characteristic curve can easily be tuned by a test engineer as tuning can be described in natural terms. Such controllers can directly be tuned in vehicle. Handicap of this solution is the fact, that this type of controller can not take the dynamics of the steering system into account. The controller itself is static, does not reflect any dynamics and can therefore not act dynamically.

EP 1 431 160 A1 shows an approach to use a fully dynamical controller in an EPAS system. Meanings of classical controls, e.g. appropriate setting of pole and zero points or inverted system models for the closed control loop are used to tune this type of an EPAS controller. Generic FR 2 839 037 A1 discloses a method and apparatus for controlling a power steering for a vehicle with a steering wheel upon which the driver enacts a steering moment supported by a moment generated by an electric power steering motor. It further includes front wheels for moving the vehicle in the direction defined by the steering angle under real-time computation of a target steering moment with the help of a dynamic reference model. The reference model is based upon continuous measurement of the steering angle, of the rotational speed of the steering wheel, of the vehicle velocity and the adjustment of the moment measured at the steering wheel close to the target moment. So, the power steering motor supplies the steering column with a moment which depends directly from the real-time measurement of the current flowing through the motor and from a power steering regime of the motor current for regulating the target current.

It is an object of the invention to improve the control of mechatronic systems.

This object is solved according to the invention with the features of claims 1, 5 and 7 respectively.

In one aspect the invention is directed to a generator for a mechatronic control system for providing a set point and/or a set state to the control system. The generator comprises a forward model and a structural image of the mechatronic system or part of the mechatronic system. A forward model and a structural image of the desired mechatronic system is used, in its desired condition and/or its desired behaviour as a set point/set state generator for a control system. The properties of the modelled system can be given in a wide range to the real world system, e.g. desired friction, active return and active damping behaviour. This offers easy tune-ability of the system in natural terms. A main benefit of this solution is that the properties of a system can be changed in a very wide range. This offers the opportunity to adapt the system to perfectly different behaviours than it is designed for and then it is possible with current control approaches. The Generator has a structural image of the mechatronic system or part of the mechatronic system. Depending on the definition the generator is a structural image of a mechatronic system like a steering system. The structural image can be a more or less direct image or an image of a desired structure.

The mechatronic control system may be a steering assembly control system of a vehicle like for example an auto mobile or a truck. A steering assembly control system of a vehicle offers a wide range of possible adaptations which match with abilities of the generator, e. g. an inexpensive frictional column EPAS can be provided with the steering feel of an expensive rack and ball-nut EPAS.

The generator may have more than one structural image for different situations of the system. The different structural images may be saved in a memory and loaded when needed or one structural image can be adapted to the situation. It is also possible that the generator utilizes more than one structural image in parallel. In case of a steering system the structural image can be adapted to different driving situations like for example parking, dynamical manoeuvre, vehicle velocities. The structural image and control parameters shall then be given to the forward model according to the driving situation.

The structural image has a position element, a connector dummy element, a sensor model element, a stiffness and damping element, a friction element, an inertia element, a damping and stiffness element and a virtual road element. The structural image is modelled like a driver would originally desire it in a certain driving situation. E. g. with a certain inertia, stiffness, damping, signal transfer and/or road/steering feel response. Usually these demands can be described in natural terms. E. g. "This steering needs less friction" or "This steering shall have more active return" or "We want more road feedback". The values are then corrected in the structural image (e.g. "Coulomb friction down by 1 Nm") and by this the real world system behaviour is tuned to the structural image behaviour. Of course this method can not neglect the physical realities of the system, e.g. terms of reachability, signal travel times etc. Nevertheless it allows tuning in a much more ample way then former approaches. Especially steering feel can directly be tuned by meanings of natural terms.

A sensor for road and/or ambient conditions is connectible to the generator and a signal of the sensor may be provided to the generator. This can especially be sensor signals which reflect road or ambient conditions, e. g. tie rod forces or knuckle accelerations or any motion information upstream and downstream the TBar Sensor. The synthetic steering feel immanent to certain EPAS systems can be avoided. Steering feedback will be controllable in a wide range. Coupling or de-coupling of the driver steering feel becomes controllable. The signal transfer function and behaviour of the steering system will be controllable in a wide range.

In a further aspect the invention is directed to a control system for a steering assembly system of a vehicle. The control system has a controller and a generator as described above for providing a set point and/or a set state to the controller. The invention can be implemented either solely in the generator for the control system as is described above or it can be implemented in the control system.

The control system for a steering assembly system may have a sensor for road and/or ambient conditions, wherein a signal of the sensor is provided to the structural image. One or more sensors can be used to adapt the function and behaviour of the steering system.

In a further aspect the invention is directed to a method for controlling a steering assembly system of a vehicle. The method has the steps of generating a set point and/or a set state with a forward model of the steering assembly system, wherein the set point and/or set state is generated with a structural image of the steering assembly system and providing the generated set point and/or set state to a controller of the steering assembly system. The use of a forward system model gives an approach with little complexity. The use of a structural image allows for an easy modelling and understanding so that tuning of the model can be achieved by service personnel in the vehicle.

The method may have a further step of adapting the system to different driving situations by selecting or adapting the structural image or parts of it accordingly. This increases flexibility by a big margin while complexity is kept low.

The method may have the further step of tuning the controller by adapting the structural image with natural terms which eases handling of the system like programming or tuning.

The accompanying drawings are included to provide a further understanding of embodiments. Other embodiments and many of the intended advantages will be readily appreciated as they become better understood by reference to the following detailed description. The elements of the drawings do not necessarily scale to each other. Like reference numbers designate corresponding similar parts.
Fig. 1 illustrates a block diagram of a control system for a steering assembly system of a vehicle according to the invention.
Fig. 2 illustrates details of a structural image of the control system according to the invention.
Fig. 3 illustrates a diagram of three calculated outputs of the system according to the invention.

In the following detailed description, reference is made to the accompanying drawings which form a part hereof and in which are shown by way of illustration specific embodiments in which the invention may be practised. In this regard, directional terminology, such as "top" or "bottom" etc. is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

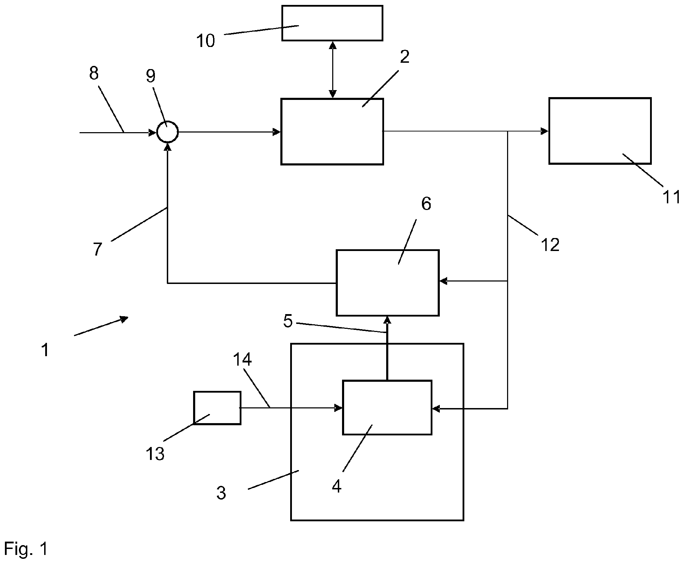

Figure 1 shows a control system 1 for a plant like a mechatronic system or a steering assembly system 2 of a vehicle. A generator 3 includes a structural image SIM 4 which contains a forward system model of the plant 2 or of the complete controlled system in a desired condition. In the SIM 4 the desired behaviour of the system is generated and given as time variant set point and/or set state 5 to a controller 6. The generator 3 can comprise the structural image 4 as depicted or the generator consists solely of the structural image. Depending on the design of the control system 1 the generator 3 generates either a set point, a set state or both.

An actuating variable 7 of the controller 6 and an input ambient/vehicle state 8 are given via a functionality 9 to the plant 2. The actuating variable 7 and input ambient/vehicle state 8 may also be directly connected to the steering system 2. More than one actuating variable and input ambient/vehicle state can of course be considered either in parallel or in serial fashion.

A driver 10 acts to the steering system 2 and vice versa. The steering system 2 acts to the vehicle/ambient 11 and gives state information 12 back to the controller 6 and to the generator 3 and/or the SIM 4. The control system 1 adapts the steering system 2 to needs of the driver 10 and/or the vehicle 11 or to certain situations of the vehicle 11 like for example parking, dynamical manoeuvre or vehicle velocities.

A sensor 13 for road and/or ambient conditions is connected to the generator 3 and delivers a signal 14 of the sensor 13 to the generator 3 and/or the structural image 4. It is also possible to use more than one sensor 13 or a sensor for vehicle conditions.

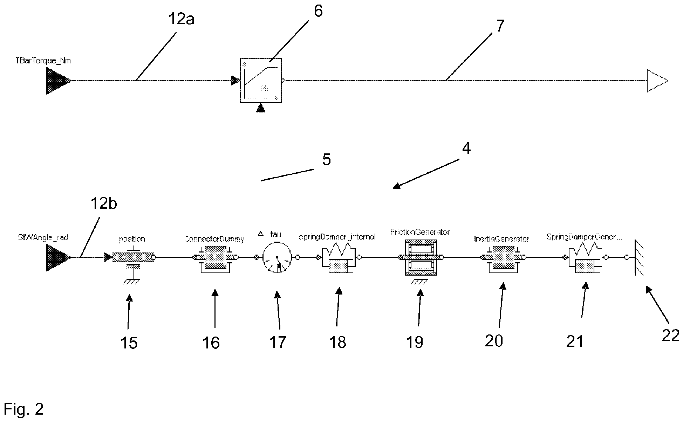

Figure 2 shows an example of the structural image 4 of the control system 1 together with the controller 6. The example sketches are carried out in the dynamical simulation environment Dymola. The invention however is not restricted to this special tool. Modelling e. g. with pure signal type tools, e.g. SIMULINK, or in a programming language, e. g. C or C++, would also be appropriate. The special model structure proposed here (the sequence of masses, stiffness's etc.) is also not limiting.

In this example, the control system 1 is fed with the steering state information 12. The TBar torque 12a is given to the controller 6 and the actual steering wheel angle 12b is given to the SIM 4. The System Image (SIM) 4 is given by a forward system model of the steering system 2. For this example the controller 6 is represented by a simple PID approach. Other configurations of the controller can be utilized. The controller 6 outputs the actuating variable 7 to the EPAS system 2. In the case of this example, the actuating variable 7 is the torque demand to the EPAS motor.

Now the structural image 3 is explained in more detail. The steering wheel angle 12b is supplied as a signal to a signal to position transducer 15 and via a dummy node 16. In Dymola this means, on the left side of the position element 15 there is a dimensionless and reaction-less signal 12b given. On the right side of the position element 15 the elements 16 to 22 show reaction-nature behaviour. In the connections of these elements yield the equations of torque conservation and motion.

A sensor model 17 decouples the set point/set state signal 5 from the SIM 4 to a set point/set state input of the controller 6. The sensor model 17 drives the steering systems internal stiffness and damping 18. The stiffness and damping element 18 can e. g. represent the stiffness and damping of the complete desired steering mechanism from steering wheel to knuckle.

The total friction of the system is accumulated in a friction element 19. In this example the friction element 19 contains the description of pure Coulomb friction. This could e.g. describe the desired steering system internal friction plus tire to road friction as sensed by the driver 10 via the steering wheel torque. The friction element 19 drives the steering systems total driver sensed inertia 20 which is modelled in an inertia element 20.

A damping and stiffness element 21 is driven by the steering inertia 20 and connects to a virtual road 22. The damping of element 21 can describe the actually driver sensed active damping of the system. Stiffness of element 21 can describe the actually driver sensed active return of the system.

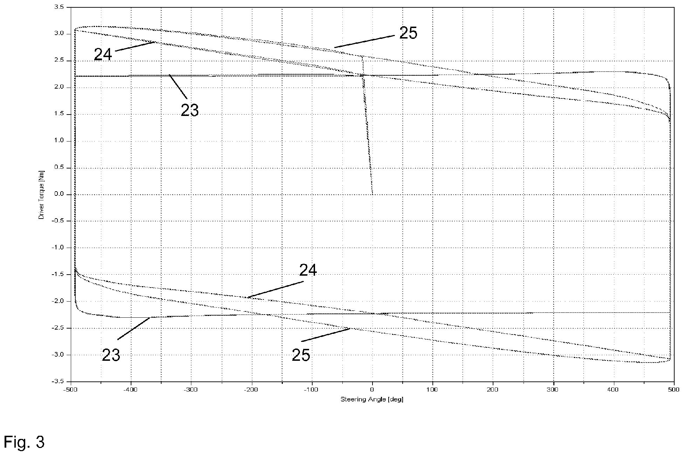

Figure 3 depicts a diagram of three calculated outputs of the system shown in Figure 2. The system was simulated in a 3D EPAS steering environment with a reduced vehicle and ambient model (not shown in the Figures). A parking manoeuvre with a harmonic course of the steering wheel angle at 0kph is taken as sample manoeuvre. The diagram shows the driver hand wheel torque effort versus the steering angle.

A natural term demand to the EPAS system could be: "The steering system shall have driver efforts of approx. 2.2Nm during parking". For example curve 23 a pure Coulomb friction force of 2.2Nm is given to the friction element 19. The parameters for damping and stiffness in element 21 are kept zero. The course of 23 shows that the system yields the demand.

"Additionally the system should show an active return behaviour". A pure Coulomb friction force of 2.2Nm is given to the friction element 19. The parameter for damping in element 21 is kept zero. The parameter for active return stiffness in element 21 is set to an appropriate value. Curve 24 shows that the demand can easily be fulfilled.

"Additionally the system should show an active damping behaviour". A pure Coulomb friction force of 2.2Nm is given to the friction element 19. The parameters and stiffness in element 21 are set to appropriate values. Curve 25 shows again, that the demand can easily be fulfilled.

It is beneficial to provide additional sensor signals 14 to the structural image 4. This could especially be sensor signals which reflect road or ambient condition, e.g. tie rod forces or knuckle accelerations or any motion information upstream and downstream the TBar sensor. A synthetic steering feel immanent to some electronic power-assisted steering systems can be avoided by this. Steering feedback will be controllable in a wide range. Coupling or de-coupling of the driver steering feel becomes controllable. The signal transfer function and behaviour of the steering system will be controllable in a wide range.

## Claims

1. Generator for a mechatronic control system (1) for providing a set point and/or a set state (5) to the control system (1), wherein the generator (3) comprises a forward model of the mechatronic system (2) or part of the mechatronic system and a structural image (4) of the mechatronic system (2) or part of the mechatronic system, **characterized in that** the structural image (4) comprises a position element (15), a connector dummy element (16), a sensor model element (17), a stiffness and damping element (18), a friction element (19), an inertia element (20), a damping and stiffness element (21) and a virtual road element (22).

2. Generator according to claim 1, wherein the mechatronic control system (1) is a steering assembly control system of a vehicle (11).

3. Generator according to claim 1 or 2, comprising more than one structural image (4) for different situations of the system (2).

4. Generator according to one of claims 1 to 3, wherein a sensor (13) for road and/or ambient conditions is connectible to the generator (3) and wherein a signal (14) of the sensor (13) is provided to the generator (3).

5. Control system for a steering assembly system (2) of a vehicle (11) comprising a controller (6) and a generator (3) according to one of claims 1 to 4 for providing a set point and/or a set state (5) to the controller (6).

6. Control system for a steering assembly system (2) according to claim 5, comprising a sensor (13) for road and/or ambient conditions, wherein a signal (14) of the sensor (13) is provided to the structural image (4).

7. Method for controlling a steering assembly system (2) of a vehicle (11) comprising the steps of:
generating a set point and/or a set state (5) with a forward model of the steering assembly system (2), wherein the set point and/or set state (5) is generated with a structural image (4) of the steering assembly system (2), wherein the structural image (4) comprises a position element (15), a connector dummy element (16), a sensor model element (17), a stiffness and damping element (18), a friction element (19), an inertia element (20), a damping and stiffness element (21) and a virtual road element (22).; and
providing the generated set point and/or set state (5) to a controller (6) of the steering assembly system (2).

8. Method for controlling a steering assembly system (2) according to claim 7, comprising the further step of adapting the system (2) to different driving situations by selecting the structural image (4) accordingly.

9. Method for controlling a steering assembly system (2) according to claim 7 or 8, comprising the further step of tuning the controller (6) by adapting the structural image (4) with natural terms.

## Patentansprüche

1. Generator für ein mechatronisches Steuerungssystem (1), um das Steuerungssystem (1) mit einem Sollwert und/oder einem Sollzustand (5) zu versorgen, wobei der Generator (3) ein Vorwärtsmodell des mechatronischen Systems (2) oder eines Teils des mechatronischen Systems und ein Strukturbild (4) des mechatronischen Systems (2) oder eines Teils des mechatronischen Systems umfasst, **dadurch gekennzeichnet, dass** das Strukturbild (4) ein Positionselement (15), ein Verbinderblindelement (16), ein Sensormodellelement (17), ein Festigkeits- und Dämpfungselement (18), ein Reibungselement (19), ein Trägheitselement (20), ein Dämpfungs- und Festigkeitselement (21) und ein virtuelles Straßenelement (22) umfasst.

2. Generator nach Anspruch 1, wobei es sich bei dem mechatronischen Steuerungssystem (1) um ein Lenkanordnungssteuerungssystem eines Fahrzeugs (11) handelt.

3. Generator nach Anspruch 1 oder 2, der mehr als ein Strukturbild (4) für unterschiedliche Situationen des Systems (2) umfasst.

4. Generator nach einem der Ansprüche 1 bis 3, wobei ein Sensor (13) für Straßen- und/oder Umgebungsbedingungen mit dem Generator (3) verbunden werden kann und der Generator (3) mit einem Signal (14) des Sensors (13) versorgt wird.

5. Steuerungssystem für ein Lenkanordnungssystem (2) eines Fahrzeugs (11), das eine Steuereinheit (6) und einen Generator (3) nach einem der Ansprüche 1 bis 4 umfasst, um die Steuereinheit (6) mit einem Sollwert und/oder einem Sollzustand (5) zu versorgen.

6. Steuerungssystem für ein Lenkanordnungssystem (2) nach Anspruch 5, das einen Sensor (13) für Straßen-und/oder Umgebungsbedingungen umfasst, wobei das Strukturbild (4) mit einem Signal (14) des Sensors (13) versorgt wird.

7. Verfahren zur Steuerung eines Lenkanordnungssystems (2) eines Fahrzeugs (11), das folgende Schritte umfasst:
Erzeugen eines Sollwerts und/oder eines Sollzustands (5) mit einem Vorwärtsmodell des Lenkanordnungssystems (2), wobei der Sollwert und/oder Sollzustand (5) mit einem Strukturbild (4) des Lenkanordnungssystems (2) erzeugt wird, wobei das Strukturbild (4) ein Positionselement (15), ein Verbinderblindelement (16), ein Sensormodellelement (17), ein Festigkeits- und Dämpfungselement (18), ein Reibungselement (19), ein Trägheitselement (20), ein Dämpfungs- und Festigkeitselement (21) und ein virtuelles Straßenelement (22) umfasst, und
Versorgen einer Steuereinheit (6) des Lenkanordnungssystems (2) mit dem erzeugten Sollwert und/oder Sollzustand (5).

8. Verfahren zur Steuerung eines Lenkanordnungssystems (2) nach Anspruch 7, das den weiteren Schritt des Anpassens des Systems (2) an unterschiedliche Fahrsituationen durch entsprechendes Auswählen des Strukturbildes (4) umfasst.

9. Verfahren zur Steuerung eines Lenkanordnungssystems (2) nach Anspruch 7 oder 8, das den weiteren Schritt des Abstimmens der Steuereinheit (6) durch Anpassen des Strukturbildes (4) mit natürlichen Größen umfasst.

## Revendications

1. Générateur pour un système de contrôle mécatronique (1) destiné à fournir un point de consigne et/ou un état de consigne (5) au système de contrôle (1), le générateur (3) comprenant un modèle prospectif du système mécatronique (2) ou d'une partie du système mécatronique et une image structurale (4) du système mécatronique (2) ou d'une partie du système mécatronique, **caractérisé en ce que**
l'image structurale (4) comprend un élément de position (15), un élément de connexion factice (16), un élément de modèle de capteur (17), un élément de rigidité et d'amortissement (18), un élément de friction (19), un élément d'inertie (20), un élément d'amortissement et de rigidité (21) et un élément de route virtuelle (22).

2. Générateur selon la revendication 1, le système de contrôle mécatronique (1) étant un système de contrôle d'ensemble de direction d'un véhicule (11).

3. Générateur selon la revendication 1 ou 2, comprenant plus d'une image structurale (4) pour différentes situations du système (2).

4. Générateur selon l'une des revendications 1 à 3, un capteur (13) de conditions routières et/ou ambiantes pouvant être connecté au générateur (3) et un signal (14) du capteur (13) étant transmis au générateur (3).

5. Système de contrôle pour un système d'ensemble de direction (2) d'un véhicule (11) comprenant un contrôleur (6) et un générateur (3) selon l'une des revendications 1 à 4 pour fournir un point de consigne et/ou un état de consigne (5) au contrôleur (6).

6. Système de contrôle pour un système d'ensemble de direction (2) selon la revendication 5, comprenant un capteur (13) de conditions routières et/ou ambiantes, un signal (14) du capteur (13) étant transmis à l'image structurale (4).

7. Procédé de contrôle d'un système d'ensemble de direction (2) d'un véhicule (11) comprenant les étapes consistant à :
générer un point de consigne et/ou un état de consigne (5) avec un modèle prospectif du système d'ensemble de direction (2), le point de consigne et/ou l'état de consigne (5) étant généré avec une image structurale (4) du système d'ensemble de direction (2), l'image structurale (4) comprenant un élément de position (15), un élément de connexion factice (16), un élément de modèle de capteur (17), un élément de rigidité et d'amortissement (18), un élément de friction (19), un élément d'inertie (20), un élément d'amortissement et de rigidité (21) et un élément de route virtuelle (22) ; et
transmettre le point de consigne et/ou l'état de consigne (5) généré à un contrôleur (6) du système d'ensemble de direction (2).

8. Procédé de contrôle d'un système d'ensemble de direction (2) selon la revendication 7, comprenant en outre l'étape consistant à adapter le système (2) à différentes situations de conduite en sélectionnant l'image structurale (4) en conséquence.

9. Procédé de contrôle d'un système d'ensemble de direction (2) selon la revendication 7 ou 8, comprenant en outre l'étape consistant à régler le contrôleur (6) en adaptant l'image structurale (4) en langage naturel.
